Europäisches Patentamt

European Patent Office

Office européen des brevets

(11) Veröffentlichungsnummer: **0 300 377**

**A1**

## (12) EUROPÄISCHE PATENTANMELDUNG

(21) Anmeldenummer: **88111383.1**

(22) Anmeldetag: **15.07.88**

(51) Int. Cl.⁴: **A01G 27/00**

(30) Priorität: **16.07.87 DE 8709797 U**

(43) Veröffentlichungstag der Anmeldung:
**25.01.89 Patentblatt 89/04**

(84) Benannte Vertragsstaaten:
**AT BE CH DE ES FR GB GR IT LI LU NL SE**

(71) Anmelder: **Polydress Plastic GmbH**
**Rossbacher Weg 5**
**D-6120 Michelstadt/Odenwald(DE)**

(72) Erfinder: **Schneider, Albert**
**Heinrich-Heine-Strasse 11 a**
**D-8033 Martinsried(DE)**

(74) Vertreter: **Hoeger, Stellrecht & Partner**
**Uhlandstrasse 14c**
**D-7000 Stuttgart 1(DE)**

(54) Vorrichtung zum selbstregulierenden Begiessen von Pflanzen in Pflanzgefässen.

(57) Um bei einer Vorrichtung zum selbstregulierten Begießen von Pflanzen in Pflanzgefäßen mit einem luftdicht verschlossenen Vorratsgefäß für eine Gießflüssigkeit, einem Gießschlauch und einem Steuerschlauch, wobei der Gieß- und der Steuerschlauch in das Vorratsgefäß münden, eine kostengünstigere Herstellung zu erreichen, wird vorgeschlagen, daß eine Luftzufuhr zum Vorratsgefäß (16; 46) durch den Steuerschlauch (14; 44) mittels überschüssig dosierter Gießflüssigkeit unterbrechbar ist.

FIG.1

## Vorrichtung zum selbstregulierenden Begießen von Pflanzen in Pflanzgefäßen

Die Erfindung betrifft eine Vorrichtung zum selbstregulierenden Gießen von Pflanzen in Pflanzgefäßen mit einem luftdicht verschlossenen Vorratsgefäß für eine Gießflüssigkeit, einem Gießschlauch und einem Steuerschlauch, wobei der Gieß- und der Steuerschlauch in das Vorratsgefäß münden.

Bekannt sind Bewässerungssysteme, bei denen die Pflanzen ständig von oben mit einer ganz bestimmten Flüssigkeitsmenge, z.B. tropfenweise, versorgt werden. Die Schwierigkeit bei diesen Bewässerungssystemen liegt darin, daß eine exakte Dosierung nur schwer erreichbar ist. Außerdem ist bei diesen Bewässerungssystemen eine selbsttätige Regulierung, d.h. eine selbsttätige Einstellung, auf einen erhöhten oder verminderten Wasserbedarf der Pflanze nicht zu realisieren. Diese Bewässerungssysteme sind deshalb vor allem für einen längerfristigen, unbeaufsichtigten Betrieb nicht geeignet.

Des weiteren sind beispielsweise aus der DE-OS 35 08 625 Bewässerungssysteme bekannt, die in einem Untersetzer der Pflanzgefäße einen konstanten Wasserspiegel gewährleisten. Nachteilig bei diesen Systemen ist, daß die Gefahr besteht, daß die Pflanzgefäße bzw. die Blumenerde nach einiger Zeit von oben her austrocknet.

Des weiteren sind Vorrichtungen bekannt, welche Pflanzen bedarfsabhängig mit Gießflüssigkeit versorgen; diese Vorrichtungen bedingen jedoch einen hohen technischen Aufwand und sind deshalb nur in Gewächshäusern, Wintergärten und dergleichen oder aber gewerblichen Anlagen interessant.

Ausgehend von diesem Stand der Technik stellt sich die Erfindung die Aufgabe, eine Vorrichtung zum selbstregulierenden Begießen von Pflanzen vorzuschlagen, die sehr kostengünstig hergestellt werden kann und damit auch für die Versorgung von einzelnen Topfpflanzen einsetzbar ist. Die vorzuschlagende Vorrichtung sollte dabei insbesondere einen selbstregulierenden Gießvorgang auch über einen längeren Zeitraum hinweg ermöglichen, ohne daß dabei eine Kontrolle notwendig ist.

Diese Aufgabe wird bei einer Vorrichtung der eingangs beschriebenen Art erfindungsgemäß dadurch gelöst, daß eine Luftzufuhr zum Vorratsgefäß durch den Steuerschlauch mittels überschüssig dosierter Gießflüssigkeit unterbrechbar ist.

Am einfachsten ist es hierbei, wenn der Steuerschlauch so angeordnet wird, daß er mit seinem freien Ende am Boden eines Untersetzers oder eines Übertopfes endet, wobei dann bei einer überschüssigen Dosierung von Gießflüssigkeit diese die Luftzufuhr zum Vorratsgefäß unterbricht. Der Gießvorgang wird in dem Augenblick beendet, wenn sich ein Gleichgewicht der in dem Gieß- und Steuerschlauch wirkenden Kräfte, die sich im wesentlichen aus den hydrostatischen Drücken in den beiden Schläuchen ergeben, eingestellt hat.

Erst wenn der Flüssigkeitsspiegel im Untersetzer oder Übertopf so weit abgesenkt hat, daß das freie Ende des Steuerschlauchs nicht mehr in den Flüssigkeitsspiegel eintaucht, wird der Gießvorgang fortgesetzt.

Das freie Ende des Steuerschlauchs kann dabei so nahe am Boden des Untersetzers oder Übertopfes angeordnet sein, daß der Gießvorgang erst nach einem vollständigen Verbrauch der überschüssigen Flüssigkeit wieder einsetzt.

Je nachdem wie das freie Ende des Gießschlauches angeordnet wird, kann die Pflanze von oben oder von unten begossen werden. Dies hat den großen Vorteil, daß das Gießen von Zeit zu Zeit von oben bzw. von unten vorgenommen werden kann, so daß sich eine Gleichverteilung der Nährstoffe im Boden ergibt. Dieser Gesichtspunkt ist insbesondere dann wichtig, wenn der Gießflüssigkeit Dünger zugesetzt wird.

Sowohl der Gießschlauch als auch der Steuerschlauch können an beliebiger Stelle in das Vorratsgefäß oder den Vorratsbehälter eingeführt werden, der Gießschlauch sollte jedoch möglichst benachbart zum Bodenteil des Vorratsgefäßes enden, um die im Vorratsbehälter vorhandene Flüssigkeitsmenge für den Gießvorgang möglichst vollständig nutzbar zu machen. Für das Ende des Steuerschlauches im Vorratsgefäß gilt lediglich, daß dieses in einer Höhe enden muß, die oberhalb des höchsten Punktes des einen Auslauf bildenden freien Endes des Gießschlauches gelegen ist. Dabei kann der Steuerschlauch oberhalb des maximalen Flüssigkeitspegels in das Vorratsgefäß einmünden und gegebenenfalls auch an der Einmündung enden.

Bei einer bevorzugten Ausführungsform der Erfindung endet der Gießschlauch an der Einmündung in das Vorratsgefäß.

Bei einer ebenfalls vorteilhaften Weiterbildung der Erfindung erstreckt sich der Steuerschlauch innerhalb des Vorratsgefäßes von der Einmündung bis auf das mögliche minimale Flüssigkeitsniveau im Vorratsgefäß. Damit läßt sich der wirksame Flüssigkeitsspiegel für den Gießvorgang einstellen.

Steuerschlauch und Gießschlauch können innerhalb des Vorratsgefäßes parallel bis benachbart zum Bodenteil des Vorratsgefäßes geführt sein, wobei dann der Gießschlauch vorteilhaft in der Art eines Winkelhebers ausgebildet ist.

Bevorzugt wird der bis nahe zum Bodenteil des Vorratsgefäßes reichende Gießschlauch einen Abstandshalter tragen, der verhindert, daß sich der Gießschlauch am Bodenteil des Vorratsgefäßes festsaugt und dadurch den Gießvorgang unterbricht.

Der Gießschlauch trägt an seinem freien Ende bei einer bevorzugten Ausführungsform einen Dorn, mit dem er in die Blumenerde gesteckt werden kann. Der Dorn besteht bevorzugt aus einem spitz zulaufenden an seinem verjüngten Ende verschlossenen Hohlkörper, der eine oder mehrere Öffnungen für den Austritt der Gießflüssigkeit aufweist.

Der Steuerschlauch wird vorzugsweise an seinem freien Ende ein aufgeweitetes Teilstück umfassen, das dafür sorgt, daß das freie Ende des Steuerschlauches schneller freigegeben wird, so daß bei einem Austrocknen des Untertellers oder Übertopfes der Gießvorgang schneller wieder einsetzt. Bei einer bevorzugten Ausführungsform ist der Gießschlauch in Form eines Siphons anordenbar.

Zweckmäßig ist es dabei, den Siphonteil des Gießschlauches mit einer so großen Fallhöhe auszustatten, daß ein Zurücklaufen der Flüssigkeit aus dem Gießschlauch in das Vorratsgefäß verhindert wird. Damit läßt sich sicherstellen, daß bei Abkühlung der Luft im Flüssigkeitsbehälter die Flüssigkeit aus dem Gießschlauch in den Gießbehälter zurückgesaugt wird und daß statt dessen der Gießvorgang durch den Steuerschlauch erfolgt.

Wichtig ist hierbei, daß die wirksame Flüssigkeitssäule im Gießschlauch stets höher ist als die, die sich maximal im Steuerschlauch aufbauen kann.

Alternativ hierzu kann zur Verhinderung des Zurückfließens des Gießwassers im Gießschlauch ein Rückschlagventil angeordnet sein.

Bei der weiteren vorteilhaften Ausgestaltung der Erfindung münden der Gieß- und der Steuerschlauch über eine Verschlußkappe in das Vorratsgefäß ein. Die Verschlußkappe dient dabei gleichzeitig zum luftdichten Abschließen des Vorratsgefäßes und kann als Flaschenverschluß ausgebildet sein, so daß im Haushalt übliche Flaschen als Vorratsgefäß verwendet werden können.

Die Verschlußkappe kann hierbei so ausgebildet sein, daß sie für eine Vielzahl von Flaschen verwendbar ist, d.h. in einem gewissen Bereich unabhängig von der Flaschenhalsweite der verwendeten Flasche einsetzbar ist. Selbstverständlich eignet sich die erfindungsgemäße Gießvorrichtung nicht nur für in Blumenerde eingepflanzte Topfpflanzen, sondern in gleicher Weise auch für Hydrokulturtöpfe und -gewächse.

Diese und weitere Vorteile der Erfindung werden im folgenden an Hand der Zeichnung noch näher erläutert. Es zeigen im einzelnen:

Fig. 1 eine erfindungsgemäße Vorrichtung zum selbstregulierenden Begießen von Pflanzen, die nach dem Winkelheberprinzip arbeitet; und

Fig. 2 eine weitere Version der erfindungsgemäßen Vorrichtung, wobei Steuer- und Gießschlauch jeweils direkt in das Vorratsgefäß münden.

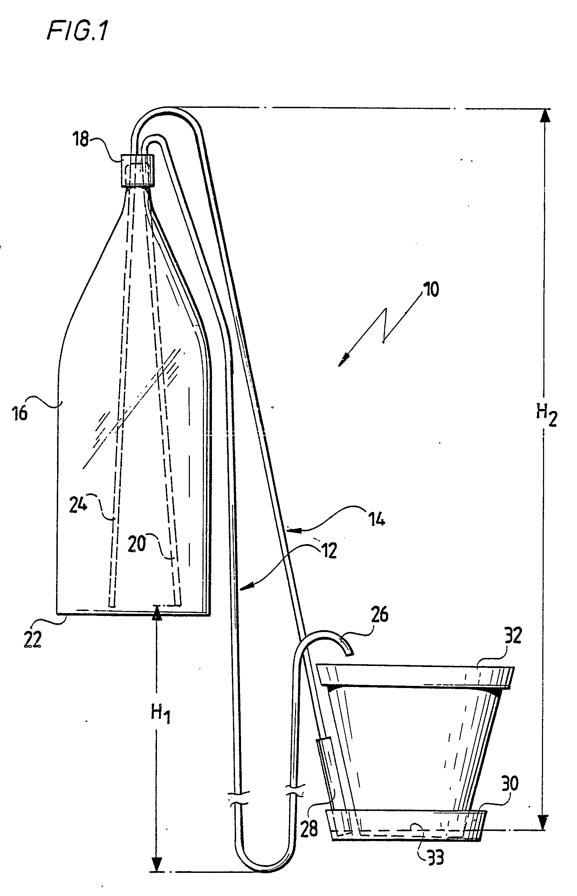

Figur 1 zeigt eine im ganzen mit 10 bezeichnete Gießvorrichtung mit einem Gießschlauch 12 und einem Steuerschlauch 14. Der Gießschlauch 12 und der Steuerschlauch 14 münden in ein Vorratsgefäß 16 über eine Verschlußkappe 18 ein.

Die Gießvorrichtung 10 arbeitet nach dem Winkelheberprinzip, weshalb der Steuerschlauch 12 mit seinem in das Vorratsgefäß 16 mündenden Ende 20 bis fast zum Bodenteil 22 des Vorratsgefäßes 16 reicht. Um zu verhindern, daß sich beim Gießvorgang das Ende 20 des Gießschlauches am Bodenteil 22 des Vorratsgefäßes 16 festsaugt, wird vorteilhaft ein Abstandshalter am Ende des Gießschlauches angebracht, der sicherstellt, daß stets ein gewisser Abstand zwischen dem Gießschlauchende und dem Bodenteil 22 eingehalten wird.

Bei der in Figur 1 gezeigten Ausführungsform der Erfindung reicht der Steuerschlauch 14 mit seinem in das Vorratsgefäß 16 mündenden Ende 24 ebenfalls bis nahe zum Bodenteil 22 des Vorratsgefäßes 16. Damit läßt sich die für den Gießvorgang wirksame Flüssigkeitssäule verringern, so daß ein genaueres Dosieren der Gießflüssigkeit möglich ist.

Vorzugsweise wird der außerhalb des Vorratsgefäßes 16 befindliche Teil des Gießschlauches 12 eine solche Länge aufweisen, daß der Gießschlauch in der Art eines Siphons angeordnet werden kann, wobei bevorzugt die Höhe $H_1$ größer oder gleich der Höhe $H_2$ in Figur 1 gewählt wird, was sicherstellt, daß nach einem unterbrochenen Gießvorgang die Gießflüssigkeit nicht im Gießschlauch in das Vorratsgefäß 16 zurückgesaugt wird, da die wirksame Flüssigkeitssäule im Gießschlauch stets höher ist als im Steuerschlauch 14. Alternativ hierzu kann im Gießschlauch ein Rückschlagventil angeordnet werden, das die gleiche Aufgabe wie das siphonartige Teil des Gießschlauches erfüllt.

Das freie Ende 26 des Gießschlauches kann so angeordnet werden, daß die Pflanze von oben oder auch von unten bewässert wird. Bei der Bewässerung von oben empfiehlt es sich, auf das freie Ende 26 einen in Figur 1 nicht dargestellten Dorn oder eine Nadel aufzustecken, die ein spitz zulaufendes Ende aufweisen, mit dem das freie Ende 26 in der Blumenerde befestigbar ist. Der Dorn oder die Nadel werden an ihrem dem Schlauch abgewandten Ende vorzugsweise geschlossen sein und an anderer Stelle Öffnungen für den Austritt der Gießflüssigkeit aufweisen. Das geschlossene vordere Ende verhindert ein Eindringen von Blumenerde in den Dorn oder die Nadel, was zu einer Verstopfung des Gießschlauches und einer Beeinträchtigung der Gießfunktion der Vorrichtung führen könnte.

Das freie Ende 28 des Steuerschlauches 14 mündet in ein Auffanggefäß für überschüssige Gießflüssigkeit, beispielsweise einen Untersetzer oder einen Übertopf. Vorzugsweise weist dabei das freie Ende 28 des Steuerschlauches 14 einen erweiterten Durchmesser auf, so daß bei einem Austrocknen des Auffanggefäßes 30 das restliche, sich im Steuerschlauch befindliche Wasser ausläuft, so daß sofort der Gießvorgang wieder ein setzt. Damit wird eine allzu große Verzögerung des Wiedereinsetzens des Gießvorganges verhindert. Zu beachten ist bei der in Figur 1 gezeigten Ausführungsform, daß bei der Inbetriebnahme der erfindungsgemässen Vorrichtung das Vorratsgefäß 16 so angeordnet wird, daß das freie Ende 20 des Gießschlauches 12 oberhalb der höchstgelegenen Stelle des freien Endes 26 des Gießschlauches 12 angeordnet ist.

Bei der Inbetriebnahme der Gießvorrichtung wird die Verschlußkappe 18 mit den freien Enden 20 und 24 des Gieß- und Steuerschlauches 12, 14 auf das Vorratsgefäß 16 aufgesetzt und dieses damit luftdicht verschlossen. Danach wird in das freie Ende 28 des Steuerschlauches 14 so lange Luft eingeblasen, bis die Gießflüssigkeit aus dem freien Ende 26 des Gießschlauches 12 austritt. Das freie Ende 28 des Steuerschlauches 14 wird danach in dem Auffanggefäß 30 positioniert, wobei dies durch eine geeignete Halterung, beispielsweise einen Drahtbügel, der mit einem Ende unter das Pflanzgefäß 32 reicht, geschehen kann.

Zu Beginn des Gießvorganges wird die Gießflüssigkeit so lange in den Pflanzbehälter 32 eingespeist, bis überschüssige Gießflüssigkeit unten aus dem Pflanzbehälter austritt und sich ein Flüssigkeitsspiegel in dem Auffanggefäß 30 bildet. Sobald dieser Flüssigkeits spiegel, der in der Figur 1 mit einer unterbrochenen Linie 33 dargestellt ist, so weit angestiegen ist, daß er das untere Ende des freien Endes 28 des Steuerschlauches 14 vollständig bedeckt, wird die weiter in das Pflanzgefäß 32 einströmende Gießflüssigkeit so lange von dem Steuerschlauch 14 aufgenommen, bis sich im wesentlichen die hydrostatischen Kräfte, die im Steuerschlauch und im Gießschlauch wirken, aufheben. Danach wird der Gießvorgang beendet, bis der Flüssigkeitsspiegel 33 das freie Ende 28 des Steuerschlauches 14 wieder freigibt, wobei die in dem erweiterten Teil des Steuerschlauches befindliche Flüssigkeit ausfließt und damit die Gleichgewichtsbedingung der hydrostatischen Kräfte in Steuer- und Gießschlauch aufhebt, weshalb nachfolgend der Gießvorgang wieder einsetzt.

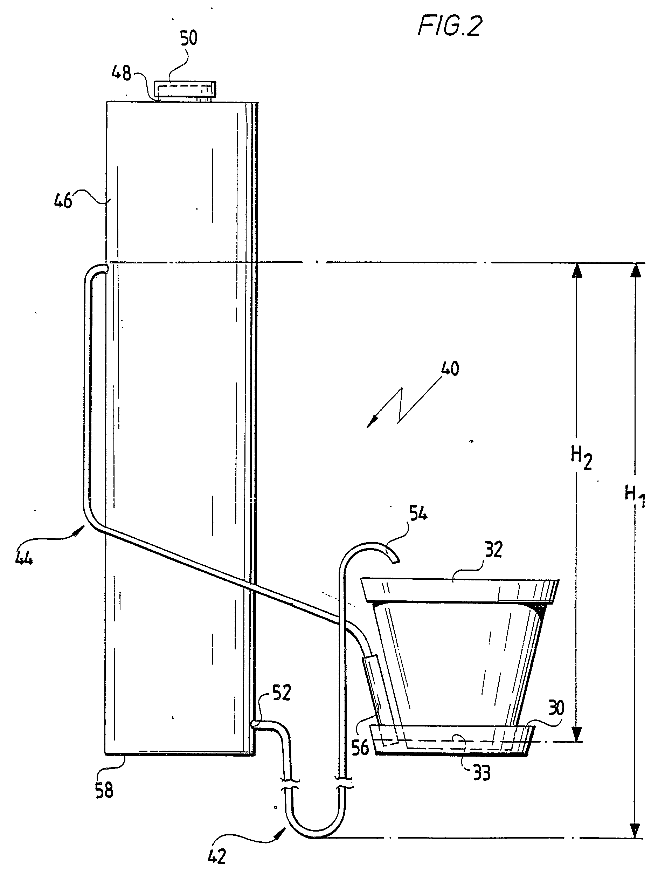

In Figur 2 ist eine weitere Variante der erfindungsgemäßen Gießvorrichtung gezeigt, die als Ganzes mit dem Bezugszeichen 40 bezeichnet ist. Hierbei münden ein Gießschlauch 42 und ein Steuerschlauch 44 jeweils mit einem Ende direkt in ein Vorratsgefäß 46 ein.

Das Vorratsgefäß 46 ist an seinem oberen Ende mit einem Einfüllstutzen 48 ausgerüstet, der mit einem Deckel 50 luftdicht verschließbar ist. Vorzugsweise wird die Einmündungsstelle 52 des Gießschlauches 42 benachbart zum Bodenteil 58 des Vorratsgefäßes 46 angeordnet sein. Das Vorratsgefäß 46 selbst wird im Betriebszustand der Gießvorrichtung so angeordnet sein, daß die Einmündungsstelle 52 höher gelegen ist als ein freies Ende 54 des Gießschlauches 42, über das die Gießflüssigkeit einem Pflanzgefäß 32 zugeführt wird. Hierdurch läßt sich der Flüssigkeitsvorrat im Vorratsgefäß 46 maximal ausnutzen.

Das freie Ende 56 des Steuerschlauches 44 weist vorzugsweise wiederum einen erweiterten freien Querschnitt auf, so daß sich die gleichen Vorteile wie bei der in Figur 1 gezeigten Vorrichtung für das Wiedereinsetzen des Gießvorganges ergeben. Das freie Ende 56 des Steuerschlauches 44 wird wiederum in einem Auffanggefäß 30 für überschüssige Gießflüssigkeit angeordnet, so daß das freie Ende 56 durch einen Flüssigkeitsspiegel 33 verschließbar ist.

Bezüglich den in Figur 1 eingezeichneten Höhen $H_1$ und $H_2$ gelten die gleichen Bedingungen, wie zuvor für Figur 1 beschrieben.

Bei dieser Konfiguration wird durch die wirksame Flüssigkeitssäule im Gießschlauch 44 verhindert, daß die Gießflüssigkeit aus dem Gießschlauch in das Vorratsgefäß 46 zurückströmt. Dies kann jedoch auch, wie zuvor beschrieben, über ein im Gießschlauch angeordnetes Rückschlagventil bewerkstelligt werden.

Bei der Inbetriebnahme der in Figur 2 gezeigten Vorrichtung reicht es aus, den Gießschlauch 42 so lange nach unten zu halten, bis Flüssigkeit aus diesem austritt.

Für beide in den Figuren 1 und 2 gezeigten Ausführungsformen der Erfindung gilt, daß die wesentlichen, erzielten Vorteile darin bestehen, daß die Pflanzen in den Pflanzgefäßen 32 über einen längeren Zeitraum hinweg ohne Beaufsichtigung, nämlich solange der Vorrat im Vorratsgefäß 46 bzw. 16 ausreicht, von oben oder von unten gegossen werden können und daß in diesem Zeitraum jeweils soviel Flüssigkeit zugeführt wird, wie die Pflanzen verbrauchen. Die richtige Gießmenge wird dabei völlig selbständig reguliert. Ein wesentlicher Vorteil ist, daß die erfindungsgemäße Gießvorrichtung 10 bzw. 40 sehr einfach aufgebaut ist und ohne Energiezufuhr arbeitet und im praktischen Betrieb keinerlei Wartung benötigt.

Bei den beiden in den Figuren 1 und 2 dargestellten Ausführungsbeispielen ist die Höhendifferenz zwischen den auslaufenden bzw. freien Enden der Gießschläuche 12, 42 und dem freien Ende des Steuerschlauches 14 bzw. 44 beliebig wählbar. Es ist deshalb möglich, die Pflanzgefäße 32 sowohl von oben als auch von unten zu begießen. Wenn über einen Übertopf oder einen Untersetzer, allgemein über ein Auffanggefäß 30, bewässert wird, ist es gleichgültig, ob die Flüssigkeit aus dem Steuerschlauch 14; 44 oder dem Gießschlauch 12; 42 austritt. Auf ein Rückschlagventil im Gießschlauch 12; 42 oder das siphonartige Durchhängen des Gießschlauches kann dabei verzichtet werden. Hierbei sollte allerdings sowohl der Steuerschlauch 14; 44 als auch der Gießschlauch 12; 42 möglichst tief im Flüssigkeitsbehälter enden, um den Inhalt des Vorratsgefäßes 16; 46 so weit auszunutzen, wie dies durch die Höhenlage des Flüssigkeitsbehälters im Verhältnis zur Höhenlage der freien Enden von Steuer- und Gießschlauch möglich ist.

## Ansprüche

1. Vorrichtung zum selbstregulierenden Begießen von Pflanzen in Pflanzgefäßen mit einem luftdicht verschlossenen Vorratsgefäß für eine Gießflüssigkeit, einem Gießschlauch und einem Steuerschlauch, wobei der Gieß- und der Steuerschlauch in das Vorratsgefäß münden, **dadurch gekennzeichnet,** daß eine Luftzufuhr zum Vorratsgefäß (16; 46) durch den Steuerschlauch (14; 44) mittels überschüssig dosierter Gießflüssigkeit unterbrechbar ist.

2. Vorrichtung nach Anspruch 1, dadurch gekennzeichnet, daß das freie Ende (28; 56) des Steuerschlauches (14; 44) so anordenbar ist, daß es durch einen Flüssigkeitsspiegel (33) der überschüssig dosierten Gießflüssigkeit gegenüber der umgebenden Atmosphäre verschließbar ist.

3. Vorrichtung nach Anspruch 1 oder 2, dadurch gekennzeichnet, daß der Gießschlauch (12; 42) im Vorratsgefäß (16; 46) benachbart zu dessen Bodenteil (22; 58) endet.

4. Vorrichtung nach einem oder mehreren der Ansprüche 1 bis 3, dadurch gekennzeichnet, daß der Steuer schlauch (14; 44) oberhalb des maximalen Flüssigkeitspegels in das Vorratsgefäß (16; 46) mündet.

5. Vorrichtung nach Anspruch 4, dadurch gekennzeichnet, daß der Steuerschlauch (44) an der Einmündung in das Vorratsgefäß (46) endet.

6. Vorrichtung nach einem oder mehreren der Ansprüche 3 bis 5, dadurch gekennzeichnet, daß der Gießschlauch (42) an der Einmündung (52) in das Vorratsgefäß (46) endet.

7. Vorrichtung nach Anspruch 4 oder 6, dadurch gekennzeichnet, daß der Steuerschlauch (14) sich von der Einmündung in das Vorratsgefäß (16) bis auf das minimale Niveau in dem Vorratsgefäß (16) erstreckt.

8. Vorrichtung nach einem oder mehreren der voranstehenden Ansprüche, dadurch gekennzeichnet, daß der Gießschlauch (12) in der Art eines Winkelhebers ausgebildet ist.

9. Vorrichtung nach einem oder mehreren der voranstehenden Ansprüche, dadurch gekennzeichnet, daß das im Vorratsgefäß (16) befindliche Ende (20) des Gießschlauches (12) einen Abstandshalter trägt.

10. Vorrichtung nach einem oder mehreren der voranstehenden Ansprüche, dadurch gekennzeichnet, daß der Steuerschlauch (14; 44) an seinem freien Ende (28; 56) ein aufgeweitetes Teilstück umfaßt.

11. Vorrichtung nach einem oder mehreren der voranstehenden Ansprüche, dadurch gekennzeichnet, daß der Gießschlauch (12; 42) an seinem freien Ende (26; 54) zur Befestigung in der Blumenerde einen Dorn trägt.

12. Vorrichtung nach einem oder mehreren der voranstehenden Ansprüche, dadurch gekennzeichnet, daß der Gießschlauch (12; 42) in Form eines Siphons anordenbar ist.

13. Vorrichtung nach einem oder mehreren der voranstehenden Ansprüche, dadurch gekennzeichnet, daß der Gießschlauch (12; 42) ein Rückschlagventil umfaßt.

14. Vorrichtung nach Anspruch 12, dadurch gekennzeichnet, daß das Siphonteil des Gießschlauches (12; 42) eine so große Fallhöhe aufweist, daß ein Zurücklaufen der Flüssigkeit aus dem Gießschlauch in das Vorratsgefäß verhindert wird.

15. Vorrichtung nach einem oder mehreren der voranstehenden Ansprüche, dadurch gekennzeichnet, daß der Gieß- und der Steuerschlauch (12; 14) über eine Verschlußkappe (18) in das Vorratsgefäß (16) münden.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 645 994 (SIBBEL) <br> * Seite 10, Absatz 1 - Seite 13, Absatz 3; Figuren 1-5 * <br> --- | 1-6,8, 11,12, 14 | A 01 G 27/00 |
| Y | US-A-4 321 937 (LITTLEHALE) <br> * Spalte 2, Zeile 64 - Spalte 4, Zeile 58; Figuren 1,2 * <br> --- | 1-6,8, 12,14 | |
| Y | US-A-2 799 121 (MODEWEG) <br> * Spalte 2, Zeilen 5-65; Figuren 1,2 * <br> --- | 11 | |
| A | DE-A-2 623 117 (KITZ) <br> * Seite 6, Absatz 2 - Seite 8, Absatz 1; Figur 1 * <br> ----- | 1 | |
| | | | **RECHERCHIERTE SACHGEBIETE (Int. Cl.4)** <br><br> A 01 G |

Der vorliegende Recherchenbericht wurde für alle Patentansprüche erstellt

| Recherchenort | Abschlußdatum der Recherche | Prüfer |
|---|---|---|
| DEN HAAG | 24-10-1988 | HERYGERS J.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
    Dokument

EPO FORM 1503 03.82 (P0403)